# EUROPÄISCHE PATENTSCHRIFT

(11) **EP 2 846 054 B1**
(45) Veröffentlichungstag und Bekanntmachung des Hinweises auf die Patenterteilung: **03.05.2017**
(21) Anmeldenummer: 13004333.4
(22) Anmeldetag: 04.09.2013
(51) Int. Cl.: F16B 37/04

(54) **Befestigungsvorrichtung mit verlagerbaren Fixierungspunkten**
Fastening device with movable fixing points
Dispositif de fixation doté de points de fixation pouvant être déplacés

(43) Veröffentlichungstag der Anmeldung: 11.03.2015
(73) Patentinhaber: HALFEN GmbH, 40764 Langenfeld (DE)
(72) Erfinder: Kirchner, Georg, 40719 Solingen (DE)
(74) Vertreter: Wasmuth, Rolf

(56) Entgegenhaltungen:
- EP-A1- 2 392 831
- EP-A2- 1 865 118
- CA-A1- 1 181 921
- DE-U1-202012 101 049
- US-A1- 2010 124 457

## Beschreibung

Die Erfindung bezieht sich auf eine Befestigungsvorrichtung mit verlagerbaren Fixierungspunkten der im Oberbegriff des Anspruchs 1 angegebenen Gattung.

Insbesondere in öffentlichen Einrichtungen wie Kindergärten, Schulen, Stadthallen und dergleichen, aber auch in Betrieben und bei Vereinsheimen gibt es Räume, die variabel genutzt werden. Für die jeweils andere Nutzung, beispielsweise für Lehrveranstaltungen, bewegungstherapeutische oder sportliche Aktivitäten oder Ausstellungen werden unterschiedliche Gegenstände und Geräte benötigt, die an Fixierungspunkten anzubringen sind. Solche Gegenstände und Geräte stellen an die Befestigungsvorrichtungen hohe Anforderungen bezüglich der wirkenden Kräfte. Außerdem werden an die Sicherheit der Befestigungsvorrichtung hohe Anforderungen gestellt.

Aus der EP 2 392 831 ist ein Verbindungselement bekannt, welches in einer Nut einer ersten Komponente eine zweite Komponente hält. Das Verbindungselement umfasst hierfür einen Montageträger und einen Befestigungsstift. Der Befestigungsstift wird zur Hälfte seines Schaftes radial formschlüssig anliegend in den Montageträger eingeführt und mit diesem um 90° zur Schiene gedreht. Die am Montageträger befindlichen Federelemente werden gegen die Schiene gepresst und verklemmen den Montageträger in der Schiene. Mittels des vollständigen Einführens des Befestigungsstiftes in ein Befestigungsloch der zweiten Komponente wird diese an der ersten Komponente gehalten.

Aus der US 2010/0124457 ist eine Befestigungsvorrichtung bekannt, die eine Schiene, einen geteilten Nutenstein und ein Einhängeelement umfasst. Der Nutenstein wird über zwei Schrauben an den Randleisten der Schiene geklemmt fixiert. Zusätzlich umfasst der Nutenstein ein Innengewinde, über welches das Einhängeelement in den Nutenstein eingeschraubt wird.

Der vorliegenden Erfindung liegt die Aufgabe zugrunde, eine Befestigungsvorrichtung der eingangs genannten Gattung zu schaffen, die auf einfache Weise handhabbar ist.

Diese Aufgabe wird durch eine Befestigungsvorrichtung mit den Merkmalen des Anspruchs 1 gelöst.

Die Befestigungsvorrichtung ist so gestaltet, dass durch Lösen des Spannelements der Nutenstein in der Schiene verschoben und durch Spannen des Spannelements der Nutenstein an gewünschter Stelle fixiert werden kann. Zur Befestigung eines Gegenstands ist lediglich ein Einhängeelement in die Öffnung des Nutensteins einzuführen und zu drehen oder seitlich zu verschieben. Die Montage von Gegenständen am vorgesehenen Fixierungspunkt ist somit von Laien werkzeuglos möglich. Die Nutensteine können in Längsrichtung der Schienen stufenlos verstellt werden.

Gemäß einer bevorzugten Ausgestaltung der Erfindung ist das Spannelement eine Spannschraube, die in einer Gewindebohrung des Nutensteins aufgenommen ist, wobei vorzugsweise die Spannschraube als eine Madenschraube ausgeführt ist. Diese Ausführung erfordert nur geringen Fertigungsaufwand. Alternativ kann als Spannelement ein Exzenter vorgesehen sein, der im Nutenstein schwenkbar gelagert ist. Dabei sollte die Anordnung des Exzenters so getroffen sein, dass im gesamten Zustand des Nutensteins der Exzenter und dessen Betätigungseinrichtung vollständig in der Schiene aufgenommen sind. Die gleiche Funktion des Verspannens kann über Elemente mit schiefen Ebenen an einem Drehkolben oder mittels Keilflächen erreicht werden.

In weiterer Ausgestaltung ist vorgesehen, dass an Randleisten der Schiene zum Schienenrücken gerichtet eine gleichmäßige Folge von Zähnen vorgesehen ist und der Nutenstein auf der den Randleisten zugewandten Seite mit Zähnen versehen ist, die bezüglich der Form und des Abstands exakt den Zähnen an den Randleisten entsprechen. Durch diese Maßnahme wird ein formschlüssiger Eingriff des Formsteins in die Schiene erreicht, wodurch eine hohe Lastaufnahme gewährleistet ist. Dabei kann es zweckmäßig sein, dass die Zähne des Nutensteins nur in einem Bereich nahe der Spannschraube vorgesehen sind. Bei Schienen ohne Zahnanordnung ist es von Vorteil, dass auf der Seite des Nutensteins, die den Randleisten zugewandt ist, ein spitzer Zahn vorgesehen ist, der beim Spannen des Nutensteins in das Material der Randleisten eingedrückt wird. Sofern die Spannkraft zur Fixierung des Nutensteins in der Schiene größer sein soll, wird es als vorteilhaft angesehen, dass in dem Nutenstein eine zweite Gewindebohrung für die Aufnahme einer weiteren Spannschraube vorgesehen ist.

Eine vorteilhafte Weiterbildung der Erfindung besteht darin, dass einer der Abschnitte der Öffnung ein Einhängeabschnitt und ein anderer Abschnitt ein Halteabschnitt ist. Dabei ist das Einhängeelement durch den Einhängeabschnitt in den Spalt einführbar und in den Halteabschnitt verschiebbar.

Eine bevorzugte Ausgestaltung der Einhängevorrichtung besteht darin, dass diese eine Platte umfasst, die an der Schiene zur Anlage kommt, und das Einhängeelement einen Schaft mit einem Kopf aufweist. Diese Elemente sind von einfacher Gestalt und daher ist die Herstellung der Einhängevorrichtung kostengünstig. Dabei ist es zweckmäßig, dass die Platte eine Gewindebohrung aufweist und das Einhängeelement eine Schraube ist, die in die Gewindebohrung geschraubt und verdrehsicher fixiert ist.

Gemäß einer alternativen Ausgestaltung ist ein Abschnitt der länglichen Öffnung in der Mitte deren Längserstreckung angeordnet und kreisförmig ausgebildet, und von diesem Abschnitt ausgehend ist je ein schlitzartiger Abschnitt vorgesehen. Die Einhängevorrichtung umfasst eine Platte und ein Einhängeelement, das einen durch die Platte geführten und in dieser drehbar gelagerten Bolzen aufweist, der an dem in den Spalt ragenden Ende mit sich quer zur Bolzenachse erstreckenden Riegelvorsprüngen versehen ist.

Als vorteilhaft wird angesehen, eine Einrichtung vorzusehen, durch die die vorbestimmte Position des eingehängten Zustands feststellbar ist. Hierzu ist es günstig, in der Platte eine Bohrung anzuordnen, die im eingehängten Zustand der Einhängevorrichtung vor der Spannschraube liegt und insbesondere konzentrisch zu dieser ist. Auf diese Weise kann die Position festgestellt werden, sie ist dann ordnungsgemäß gegeben, wenn die Spannschraube mittig in der Bohrung der Platte erscheint. Um auszuschließen, dass die Einhängevorrichtung in einer um die Achse des Einhängeelements verdrehten Position befestigt wird, ist es zweckmäßig, an der der Schiene zugewandten Seite der Platte eine Vorrichtung zum formschlüssigen Eingriff in die Längsnut der Schiene vorzusehen. Hierzu kann die Platte eine weitere Gewindebohrung aufweisen, in die eine Sicherungsschraube gedreht ist. Der Kopf der Sicherungsschraube ist dabei etwas geringer als die Breite der Längsnut der Montageschiene, so dass der Kopf in dieser Längsnut liegt.

Es kann zweckmäßig sein, dass der Nutenstein im Bereich der Einhängeöffnung dünner und somit der Abstand zum Schienenrücken größer ist. Dadurch wird das Einhängen und Verschieben des Einhängeelements erleichtert. Um eine Fehlmontage der Einhängevorrichtung durch Einhängen am oberen Rand des Nutensteins zu vermeiden, ist es vorteilhaft, dass der Nutenstein an einem Ende mit einer Gewindebohrung versehen ist, mit einer darin aufgenommenen Schraube, deren Kopf sich in einem Spalt zwischen dem Nutenstein und dem Schienenrücken befindet. Um ein unbeabsichtigtes Verschieben der Einhängevorrichtung relativ zum Nutenstein zu vermeiden, ist es zweckmäßig, dass in der Platte und dem Nutenstein Bohrungen vorgesehen sind, die in eingehängtem Zustand der Einhängevorrichtung konzentrisch angeordnet sind und zur Aufnahme eines Verriegelungselements dienen. In bevorzugter Ausführung des Erfindungsgegenstands bestehen die Schienen und Nutensteine aus Stahl. Das Befestigungssystem ist sowohl für Fixierungspunkte an Wänden als auch an Decken geeignet. Außer der Verwendung in Räumen mit variabler Nutzung ist auch die Verwendung der Erfindung in folgenden Bereichen möglich:
- zur Lagesicherung von Frachtgegenständen auf Fahrzeugen,
- in Schienenfahrzeugen mit voraus geplanten wechselbaren Inneneinrichtungsvarianten,
- bedarfsweise veränderbarer technischer Gebäudeausrüstung,
- bei technischen Produkten, die kunden- oder länderspezifisch anpassbar sein müssen.

Ausführungsbeispiele der Erfindung sind nachstehend anhand der Zeichnung näher erläutert. In der Zeichnung zeigt:
- Fig. 1: das Einsetzen eines Nutensteins in eine Montageschiene,
- Fig. 2: eine Ausführungsvariante zu Fig. 1 mit einer Ankerschiene,
- Fig. 3: einen Längsschnitt durch einen Ausschnitt einer Montageschiene mit darin angeordnetem und fest gespanntem Nutenstein,
- Fig. 4: eine Montageschiene mit Nutenstein gemäß Fig. 3 und Einhängevorrichtung eines zu befestigenden Gegenstandes,
- Fig. 5: eine Ansicht in Richtung des Pfeils V in Fig. 4,
- Fig. 6: eine Vorderansicht eines Nutensteins,
- Fig. 7: einen Längsschnitt entlang der Linie VII-VII in Fig. 6,
- Fig. 8: eine Vorderansicht einer Platte der Einhängevorrichtung,
- Fig. 9: einen Schnitt entlang der Linie IX-IX in Fig. 8,
- Fig. 10: eine schematische Darstellung eines Ausschnitts einer Wand mit darin angeordneten Ankerschienen,
- Fig. 11: eine Ausführungsvariante zur Figur 10 mit einer Wandbekleidung,
- Fig. 12: eine Ausführungsvariante zu Figur 11 mit Abdeckstreifen für die Ankerschiene,
- Fig. 13: einen Ausschnitt einer Montageschiene mit Nutenstein,
- Fig. 14: eine aus Ankerschienen und Montageschiene und eingesetzten Nutensteinen gebildete variable Befestigungsvorrichtung,
- Fig. 15: eine Ausführungsvariante einer Einhängevorrichtung und eines Nutensteins,
- Fig. 16: eine am Nutenstein montierte Einhängevorrichtung gemäß Fig. 15.

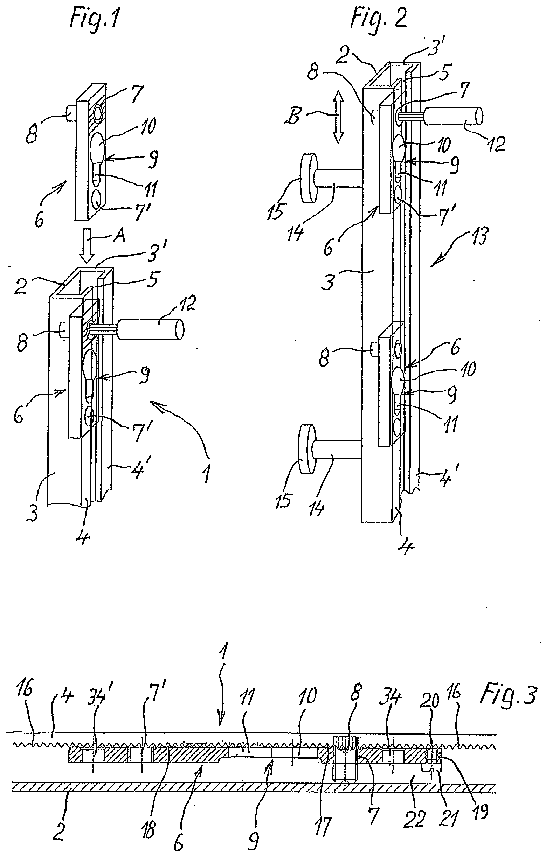

In Fig. 1 ist eine C-förmige Schiene 1 mit rechteckigem Querschnitt gezeigt, die einen ebenen Schienenrücken 2 und zwei senkrecht zu diesem angeordnete Seitenwände 3, 3' und an diesen angeformte parallel zum Schienenrücken 2 verlaufende Randleisten 4, 4' umfasst. Zwischen den Randleisten 4 und 4' ist eine Längsnut 5 gebildet. Die Schiene ist im gezeigten Beispiel als Montageschiene 1 ausgeführt und besteht vorzugsweise aus Stahl. Die Montageschiene kann an einer Wand befestigt, beispielsweise angeschraubt sein. Solche Schienen 1 sind als sogenannte HALFEN-Schienen bekannt. Zum Einsetzen in die Montageschiene 1 ist ein Nutenstein 6 vorgesehen, der ebenfalls aus Stahl besteht und die Form einer länglichen Platte aufweist. Nahe der Enden des plattenförmigen Nutensteins 6 ist jeweils eine Gewindebohrung 7, 7' vorgesehen, in die eine Spannschraube 8, vorzugsweise eine Madenschraube, einschraubbar ist. Zwischen den Gewindebohrungen 7, 7' ist eine als Langloch gestaltete Öffnung 9 angeordnet, die einen Einhängeabschnitt 10 und einen Halteabschnitt 11 umfasst, wobei der Einhängeabschnitt 10 einen größeren Durchmesser aufweist als die Breite des Halteabschnitts 11. Der in der Montageschiene 1 verspannte Nutenstein 6 bildet einen Fixierungspunkt der Befestigungsanordnung.

Zur Montage des Nutensteins 6 in der Montageschiene 1 wird dieser gemäß Pfeil A an einem Ende der Montageschiene 1 in diese eingeschoben, wobei das auf der Rückseite des Nutensteins 6 hervorstehende Ende der Spannschraube 8 dem Schienenrücken 2 zugewandt ist. Sobald die gewünschte Lage des Nutensteins 6 durch Längsverschieben in der Ankerschiene 1 erreicht ist, wird der Nutenstein 6 provisorisch auf geeignete Weise gehalten und mittels eines Schraubendrehers 12 die Spannschraube 8 gedreht, so dass diese an dem Schienenrücken 2 und der Nutenstein 6 an den Randleisten 4, 4* zur Anlage kommen. Dann wird die Spannschraube 8 noch etwas weiter gedreht und eine Spannkraft erzeugt, durch die der Nutenstein 6 gegen die Randleisten 4, 4' gepresst wird. Damit ist der Nutenstein 6 in seiner Lage fixiert und zur Aufnahme von mechanischen Belastungen geeignet.

Die Fig. 2 zeigt eine als Ankerschiene 13 ausgebildete C-förmige Schiene, die bezüglich ihrer Form ebenso gestaltet ist wie die Montageschiene 1 in Figur 1, jedoch zusätzlich mit an dem Schienenrücken 2 befestigten Ankern 14 mit einem Kopf 15 versehen ist. Eine solche Ankerschiene 13 ist zum Einbetten in eine Betonwand oder Betondecke vorgesehen, so dass nur die durch die Randleisten 4, 4' gebildete Vorderseite frei liegt. Die Anker 14 werden vom Betonmaterial umschlossen, so dass sie die Ankerschienen 13 im Beton halten. Die in der Ankerschiene 13 befindlichen Nutensteine 6 können mittels des Schraubendrehers 12 gelöst werden, indem die Spannschraube 8 in Löserichtung gedreht wird. Wenn ein ausreichendes Spiel zwischen Nutenstein 6 und Randleisten 4, 4' erreicht ist, kann der Nutenstein 6 in Längsrichtung der Ankerschiene 13 gemäß dem Pfeil B verschoben und in einer anderen gewünschten Position fest fixiert werden, wie dies zur Fig. 1 beschrieben ist. Die Nutensteine 6 in Fig. 2 sind gleich gestaltet wie in Fig. 1, so dass die Bezugszeichen für gleiche Teile mit denjenigen zur Fig. 1 übereinstimmen.

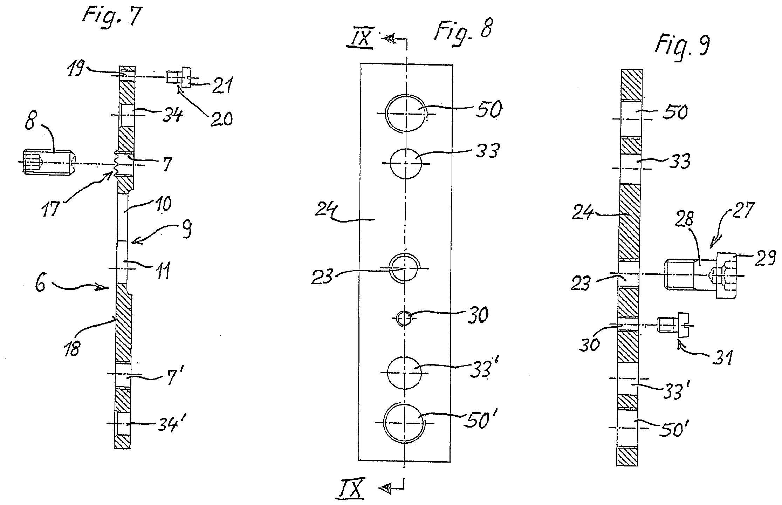

In Fig. 3 ist ein Längsschnitt durch einen Ausschnitt der Montageschiene 1 gezeigt mit einem darin angeordneten Nutenstein 6. An der zum Schienenrücken 2 gewandten Seite der Randleisten 4, 4' der Montageschiene 1 (in Fig. 3 ist lediglich die Randleiste 4 dargestellt) sind diese über ihre gesamte Länge gezahnt, das heißt mit einer gleichmäßigen Folge von Zähnen 16 versehen. Wie insbesondere aus Fig. 7 ersichtlich ist, weist der Nutenstein 6 im Bereich der Gewindebohrung 7 ebenfalls mehrere Zähne 17 auf, die bezüglich der Form und des Abstands exakt den Zähnen 16 an den Randleisten 4, 4' entsprechen. In der Darstellung in Fig. 3 greifen die Zähne des Nutensteins 6 und die Zähne der Montageschiene ineinander und bilden auf diese Weise eine formschlüssige Verbindung. Die in die Gewindebohrung 7 geschraubte Spannschraube 8 ist fest gegen den Schienenrücken 2 gespannt, so dass der Nutenstein 6 zusätzlich zum Ineinandergreifen der Zähne 16, 17 mit einer Anlagefläche 18 gegen die Zähne 16 der Randleisten 4, 4' gepresst wird. Diese Anpresskraft kann dadurch gesteigert werden, dass auch in die Gewindebohrung 7' eine Spannschraube gedreht und diese fest gegen den Schienenrücken 2 gespannt wird.

Weiter ist aus Fig. 3 ersichtlich, dass die den Nutenstein 6 bildende Platte im Bereich der Öffnung 9 etwas dünner ausgebildet ist, so dass der Abstand zum Schienenrücken 2 größer ist, was das Einführen eines Einhängeelements erleichtert. An dem Ende des Nutensteins 6, das in vertikaler Erstreckung der Montageschiene 1 (vgl. Fig. 1) oben ist, weist der Nutenstein 6 eine Gewindebohrung 19 auf, in die eine Schraube 20 als Sicherheitselement geschraubt ist. Diese Schraube 20 besitzt einen Kopf 21 der sich in einem Spalt 22 zwischen dem Nutenstein 6 und dem Schienenrücken 2 befindet. Durch diese Maßnahme wird verhindert, dass irrtümlich hinter dem oberen Ende des Nutensteins 6 ein Einhängeelement eingesteckt wird, was zu einer Fehlmontage führen würde. Der Nutenstein 6 ist mit Bohrungen 34, 34' versehen, auf deren Funktion später eingegangen wird.

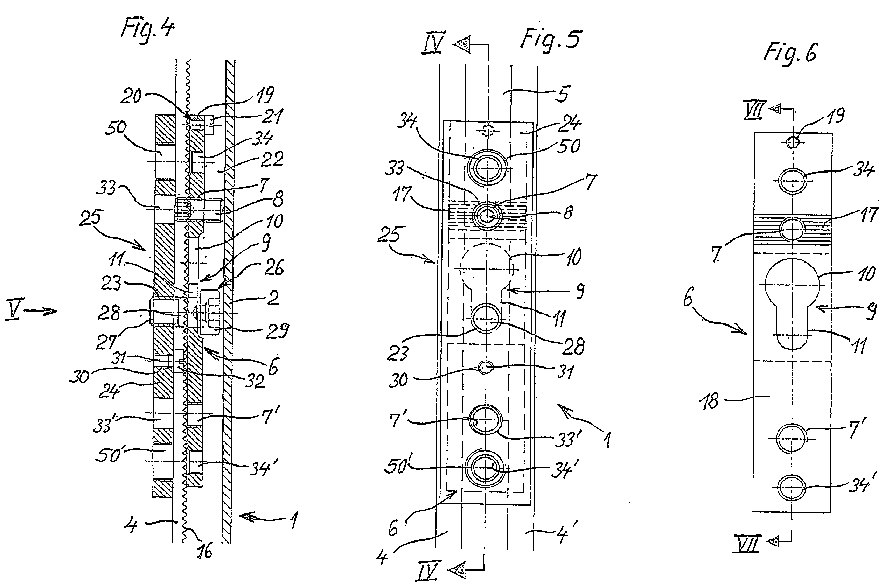

Die Fig. 4 zeigt einen Längsschnitt durch einen Ausschnitt der Montageschiene 1 mit Nutenstein 6 gemäß Fig. 3 jedoch in vertikaler Ausrichtung der Montageschiene 1. Der Nutenstein 6 ist in der Montageschiene 1 fest verspannt, wie dies zu Fig. 3 beschrieben ist. Die Bezugszeichen für gleiche Teile stimmen mit denjenigen der Fig. 3 überein. In Fig. 4 ist eine Einhängevorrichtung 25 gezeigt, die im Wesentlichen eine längliche Platte 24 mit einem Einhängeelement 26 umfasst. In der Mitte der Längsstreckung der Platte 24 ist eine Gewindebohrung 23 angeordnet, in die eine als Einhängeelement 26 dienende Schraube 27 geschraubt ist, deren Schaft 28 sich durch den Halteabschnitt 11 erstreckt und deren Kopf 29 zwischen dem Nutenstein 6 und dem Schienenrücken 2 liegt. Die Schraube 27 ist gegen Verdrehen im Gewinde 23 gesichert, beispielsweise durch Schweißen, Löten, Stauchen oder dergleichen. Die Einhängevorrichtung 25 ist an einem an der Montageschiene 1 anzubringenden Gegenstand befestigt, beispielsweise an der Rückseite einer Tafel. Zum Einhängen wird dieser Gegenstand mit dem Einhängeelement 26, im vorliegenden Beispiel dem Kopf 29, zu dem Einhängeabschnitt 10 der Öffnung 9 geführt und durch diesen in den Spalt 22 bewegt. Danach kann die Einhängevorrichtung 25 abgesenkt werden, so dass der Schaft 28 der Schraube 27 am Ende des Halteabschnitts 11 der Öffnung 9 aufliegt. Auf diese Weise ist der anzubringende Gegenstand sicher befestigt und diese Verbindungsanordnung für eine hohe Lastaufnahme geeignet.

Um auszuschließen, dass die Einhängevorrichtung in einer um die Achse des Einhängeelements verdrehten Position befestigt wird, ist es zweckmäßig, an der der Schiene 1 zugewandten Seite der Platte 24 eine Vorrichtung zum formschlüssigen Eingriff in die Längsnut 5 der Schiene 1 vorzusehen.

In Fig. 4 ist gezeigt, dass die Platte 24 eine weitere Gewindebohrung 30 aufweist, in die eine Sicherungsschraube 31 gedreht ist. Die Sicherungsschraube 31 besitzt einen Kopf 32, dessen Durchmesser etwas geringer ist als die Breite der Längsnut 5 der Montageschiene 1 (vgl. Fig. 1). Das ordnungsgemäße Einhängen des Einhängeelementes 26 ist nur möglich, wenn die Einhängevorrichtung entsprechend zur Montageschiene 1 ausgerichtet ist, indem der Kopf 32 der Sicherungsschraube 31 in der Längsnut der Montageschiene 1 liegt. Ferner sind in der Platte 24 Bohrungen 33, 33' vorgesehen, die koaxial zu den Gewindebohrungen 7, 7' des Nutensteins 6 angeordnet sind und dazu dienen, ein lagegenaues Einhängen zu kontrollieren, weil in dieser Position die Spannschraube 8 durch die Bohrung 33, 33* sichtbar ist und in der definierten Stellung in deren Mitte liegt.

Die Platte 24 ist außerdem mit Bohrungen 50, 50' versehen, die konzentrisch zu den Bohrungen 34. 34' im Nutenstein 6 liegen. Diese Bohrungen 50, 50' und 34, 34' dienen zur Aufnahme von Verriegelungselementen, die ein Verschieben der Einhängevorrichtung 25 relativ zum Nutenstein 6 verhindern. Je nach Bedarf kann ein Paar der Bohrungen 34, 50 oder 34', 50' oder auch beide Paare mit Verriegelungsmitteln versehen sein. Eine einfache Ausführung eines Verriegelungsmittels besteht in einer Schraube, die sich durch beide konzentrischen Bohrungen erstreckt. Ein schnelleres Verriegeln und Lösen ist mittels handelsüblichen Rast- oder Sperrbolzen möglich, die in ein Gewinde in den Bohrungen 50, 50' eingeschraubt werden und an diesen auch beim Lösen der Befestigungsvorrichtung verbleiben.

Die Fig. 5 zeigt eine Ansicht der Verbindungsanordnung in Richtung des Pfeils V in Fig. 4. Dabei ist die vor der Montageschiene 1 befindliche Platte 24 der Einhängevorrichtung 25 zu sehen, ebenso wie das vordere Ende des Schafts 28 der Schraube 27. Außerdem sind durch die Bohrungen 33, 33' die konzentrisch dahinterliegenden Gewindebohrungen 7, 7' sichtbar, sowie die in der Gewindebohrung 7 befindliche Spannschraube 8. Ebenso sind die jeweils konzentrischen Bohrungen 34, 50 bzw. 34', 50' zu sehen. Ferner ist die Sicherungsschraube 31 in der Gewindebohrung 30 zu erkennen. Der Nutenstein 6 sowie dessen Gestaltungsmerkmale sind gestrichelt gezeichnet, da diese in Fig. 5 verdeckt sind, es ist jedoch die relative Lage der Einhängevorrichtung 25 zum Nutenstein 6 erkennbar. Für gleiche Teile stimmen die Bezugszeichen mit denjenigen der Figuren 3 und 4 überein. Mit IV-IV ist die Schnittlinie angegeben, die die Darstellung in Fig. 4 zeigt.

Die Fig. 6 zeigt eine Vorderansicht des Nutensteins 6 mit der als Langloch gestalteten Öffnung 9, die den Einhängeabschnitt 10 und den Halteabschnitt 11 umfasst. Über dem Einhängeabschnitt 10 befindet sich der Bereich mit den quer zur Längserstreckung des Nutensteins 6 verlaufenen Zähnen 17. In diesem Bereich ist die Gewindebohrung 7 vorgesehen, wohingegen die Gewindebohrung 7' in einem Abstand unterhalb des Halteabschnitts 11 angeordnet ist. Am oberen Ende befindet sich die Gewindebohrung 19 und zwischen dieser und der Bohrung 7 die Bohrung 34. Nahe dem unteren Ende des Nutensteins 6 befindet sich die Bohrung 34'.

Die Fig. 7 zeigt einen Schnitt entlang der Linie VII-VII in Fig. 6. Der Nutenstein 6 ist dabei als Einzelteil dargestellt mit der jeweils noch einzuschraubenden Spannschraube 8 und Schraube 20. Es wird aus dieser Darstellung deutlich, dass die Spannschraube 8 als Madenschraube mit einem Innensechskant zur Aufnahme des Schraubendrehers 12 (vgl. Fig. 1) ausgebildet ist. Im Bereich der Gewindebohrung 7 ist der Nutenstein 6 auf der Seite, die die Anlagefläche 18 bildet, mit den Zähnen 17 versehen. Im mittleren Bereich befindet sich die Öffnung 9, unterhalb von dieser die Gewindebohrung 7' und am oberen Ende des Nutensteins 6 die Gewindebohrung 19 zur Aufnahme der Schraube 20. Die Bohrungen 34, 34' sind ebenfalls ersichtlich.

Die Fig. 8 zeigt die Vorderansicht der Platte 24, die ebenfalls aus Stahl besteht, mit den darin befindlichen Bohrungen 33, 33', der Gewindebohrung 23, den Bohrungen 50, 50' und der Gewindebohrung 30. Aus der Darstellung in Fig. 9 ist ersichtlich, dass die Platte 24 auf beiden Seiten eben ist, so dass sie auf beiden Seiten eine gleiche Gestaltung aufweist und entweder auf der Vorderseite oder auf der Rückseite mit den Schrauben 27 und 31 bestückt werden kann. Erforderlich ist lediglich, dass beide Schrauben 27, 31 auf derselben Seite zugeführt werden, wie dies in Fig. 9 dargestellt ist.

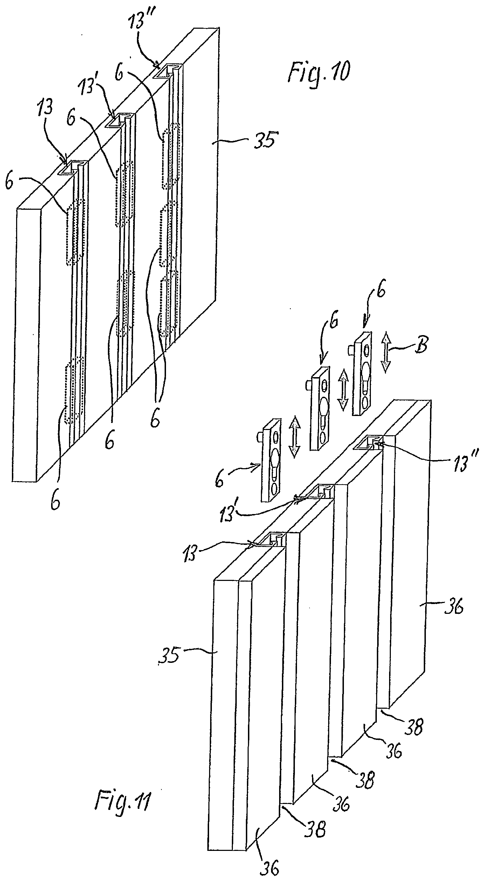

Die Fig. 10 zeigt schematisch einen Ausschnitt einer beispielsweise aus Beton gefertigten Wand 35 mit darin angeordneten Ankerschienen 13, 13', 13", wie diese zu Fig. 2 beschrieben sind. Die Ankerschienen 13, 13', 13" sind vertikal ausgerichtet und verlaufen parallel zueinander. In den Ankerschienen 13, 13', 13" befinden sich Nutensteine 6 in einer den jeweiligen Anforderungen entsprechenden Anzahl, wobei im gezeigten Ausführungsbeispiel im Ausschnitt der Wand 35 die Ankerschienen 13, 13' mit jeweils zwei Nutensteinen 6 und die Ankerschiene 13" mit drei Nutensteinen 6 bestückt sind.

In Fig. 11 ist eine Ausführungsvariante zu Fig. 11 gezeigt, bei der die Wand 35 mit einer Wandbekleidung 36 versehen ist, die beispielsweise aus einem schalldämmenden Material besteht. Zwischen den Elementen der Wandbekleidung 36 sind vor den Schienen 13, 13', 13" Spalte 38 gebildet. Die Nutensteine 6 werden endseitig in die Ankerschienen 13, 13', 13" eingeführt und können in den Ankerschienen in Richtung der Pfeile B verschoben und an einer gewünschten Stelle fixiert werden, wie dies zu Fig. 1 und Fig. 2 beschrieben ist.

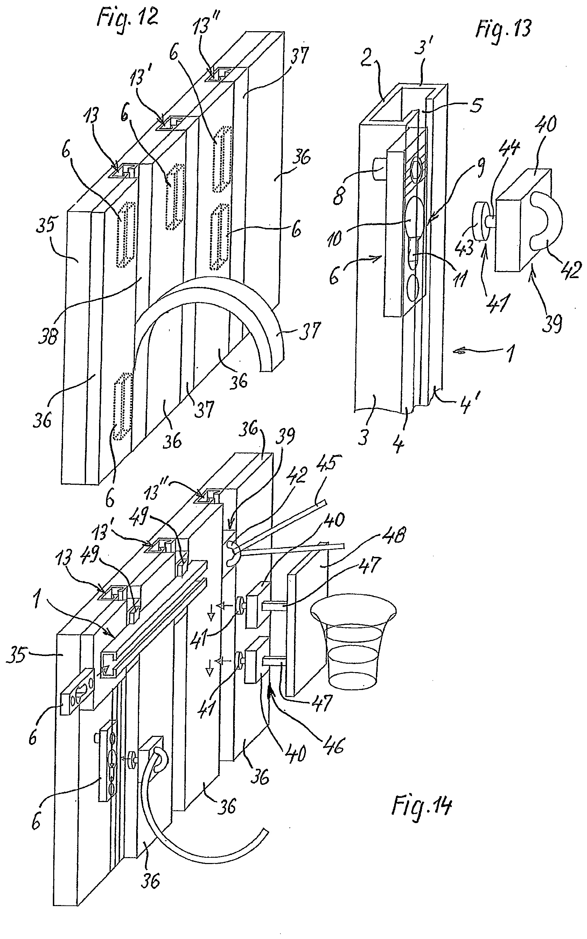

Die Fig. 12 zeigt die Wand 35 mit Ankerschienen 13, 13', 13" und darin befindlichen Nutensteinen 6 sowie einer Wandbekleidung 36 wie in Fig. 11. Zur weiteren Schalldämmung sind Leisten 37 zur Abdeckung der Ankerschienen 13, 13', 13" vorgesehen, die die zwischen den Elementen der Wandbekleidung 36 gebildeten Spalte 38 ausfüllen. Die Leisten 37 bestehen vorzugsweise aus einem magnetischen, elastischen Material und sind auch geeignet, nicht genutzte Nutensteine 6 zu überdecken, da diese nicht aus der Längsnut 5 der Ankerschienen hervorstehen.

In Fig. 13 ist ein Ausschnitt einer Montageschiene 1 mit einem darin mittels der Spannschraube 8 fest fixierten Nutenstein 6 gezeigt. An dem Nutenstein 6 soll eine Einhängevorrichtung 39 befestigt werden. Die Einhängevorrichtung 39 umfasst eine Platte 40 mit einem Einhängeelement 41 auf der dem Nutenstein 6 zugewandten Seite der Platte 40 und einem Bügel 42 auf der gegenüberliegenden Seite der Platte. Zur Befestigung der Einhängevorrichtung 39 wird diese dem Nutenstein 6 zugeführt und ein Kopf 43 des Einhängeelements 41 durch den Einhängeabschnitt 10 der Öffnung 9 gesteckt und dann die Einhängevorrichtung 39 vertikal nach unten verschoben, bis ein Schaft 44 des Einhängeelements 41 am Ende des Halteabschnitts 11 aufliegt. Der Bügel 42 dient beispielsweise zur Durchführung oder Befestigung eines Seils.

Die Fig. 14 zeigt die Wand 35 mit den Ankerschienen 13, 13', 13" und der Wandbekleidung 36. In einem Nutenstein in der Ankerschiene 13" ist die Einhängevorrichtung 39 befestigt, wobei durch den Bügel 42 ein Seil 45 geführt ist. Eine weitere Einhängevorrichtung 46 soll an Nutensteinen in der Ankerschiene 13' befestigt werden. Diese Einhängevorrichtung 46 umfasst zwei in einem vertikalen Abstand zueinander angeordnete Platten 40 mit je einem Einhängeelement 41 sowie ein Tafelelement 48, das mittels der Bolzen 47 an den Platten 40 befestigt ist. Das Tafelelement 48 kann beispielsweise der Träger eines Basketballkorbs sein. Für die Einhängeelemente 41 kann je ein einzelner Nutenstein vorgesehen sein, es ist jedoch auch möglich, Nutensteine mit zwei Öffnungen zur Aufnahme von Halteelementen vorzusehen. Zur Befestigung an dem Nutenstein 6 in der Ankerschiene 13 ist eine weitere Einhängevorrichtung 39 vorgesehen. Außerdem zeigt Fig. 14 die Befestigung einer horizontal verlaufenden Montageschiene 1 an den Ankerschienen 13, 13', wobei die Montageschiene 1 mit Einhängevorrichtungen 49 ausgestattet ist, die in Nutensteinen der Ankerschienen 13, 13' eingehängt sind. In die Montageschiene 1 sind Nutensteine 6 einführbar und in dieser horizontal verschiebbar, wobei in einer gewünschten Position die Fixierung mittels einer Spannschraube erfolgt, wie weiter oben beschrieben.

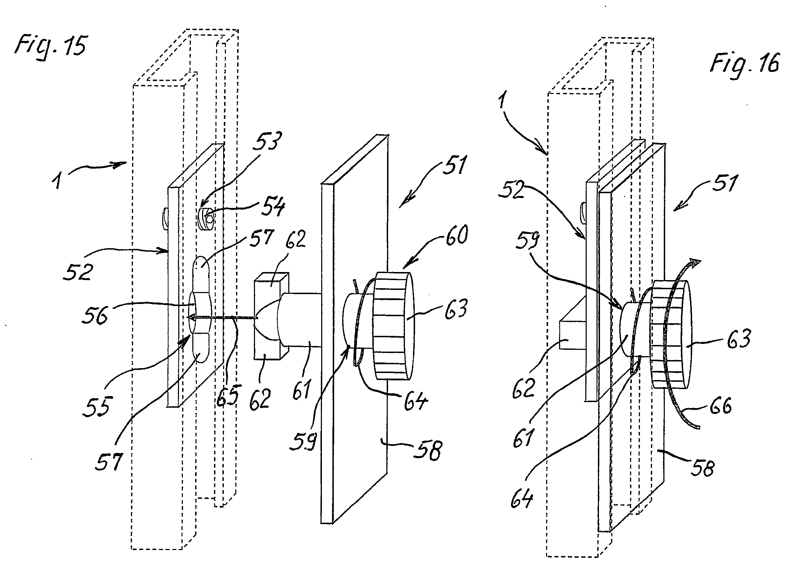

In Fig. 15 ist eine Ausführungsvariante einer Einhängevorrichtung 51 und eines Nutensteins 52 in perspektivischer Darstellung gezeigt. Die Montageschiene 1 ist lediglich gestrichelt gezeichnet, um die Konturen des Nutensteins 52 deutlicher erkennen zu können. Der Nutenstein 52 ist ebenfalls eine flache Platte mit einer Gewindebohrung 53 zur Aufnahme einer Spannschraube 54, die auch in diesem Ausführungsbeispiel als Madenschraube ausgebildet ist. In dem Nutenstein 52 ist eine längliche Öffnung 55 vorgesehen, mit einem, bezogen auf die Längserstreckung dieser Öffnung, in der Mitte angeordneten Abschnitt 56, der im Wesentlichen kreisförmig ist und von dem ausgehend je ein schlitzartiger Abschnitt 57 vorgesehen ist. Die Einhängevorrichtung 51 besteht aus einer länglichen Platte 58 mit einer mittigen Öffnung 59, in der ein Einhängeelement 60 aufgenommen ist. Das Einhängeelement 60 umfasst einen zylindrischen Bolzen 61, der in der Öffnung 59 drehbar gelagert ist. Mit an einem Ende sich quer zur Bolzenachse erstreckenden Riegelvorsprüngen 62, die diametral angeordnet sind, und mit am anderen Ende des Bolzens 61 angebrachtem Knauf 63. Zwischen dem Knauf 63 und der Platte 58 ist eine Schraubendruckfeder 64 angeordnet. Zum leichteren Einführen in den Abschnitt 56 der Öffnung 55 ist der Bolzen 61 an dem Ende mit den Riegelvorsprüngen 62 verjüngt ausgeführt. Der zylindrische Bolzen 61 ist dem Durchmesser des kreisförmigen Abschnitts 56 der Öffnung 55 angepasst.

Zum Befestigen der Einhängevorrichtung 51 an dem Nutenstein 52, wie dies in Fig. 16 gezeigt ist, wird die Einhängevorrichtung 51 gemäß Pfeil 65 in Fig. 15 zu dem Nutenstein 52 geführt und das vordere Ende des Bolzens 61 mit den Riegelvorsprüngen 62 in die Öffnung 55 eingeführt und so weit hineingesteckt, bis sich die Riegelvorsprünge 62 hinter dem Nutenstein 52 befinden. Dabei wird die Schraubendruckfeder 64 weiter gespannt. Der Bolzen 61 liegt dann mit seinem zylindrischen Abschnitt in dem mittleren Abschnitt 56 der Öffnung 55. Durch Drehen des Einhängeelements 60 mittels des Knaufs 63 um 90°, wie dies beispielsweise durch den Pfeil 66 in Fig. 16 dargestellt ist, werden die Riegelvorsprünge 62 aus dem Bereich der schlitzartigen Abschnitte 57 in eine Lage quer zur Längsrichtung des Nutensteins 52 gedreht und greifen somit hinter den Nutenstein. Beim Loslassen des Knaufs 63 drückt die Schraubendruckfeder 64 den Knauf 63 zurück, so dass die Riegelvorsprünge 62 gegen den Nutenstein 52 gespannt werden. Der in Fig. 15 und 16 dargestellte Nutenstein 52 kann selbstverständlich auch mit Zähnen ausgestattet werden, wie dies in Fig. 5 bis 7 dargestellt ist.

Eine weitere Ausgestaltung der Erfindung besteht im Hinblick auf alle zuvor beschriebenen Ausführungsbeispiele darin, dass durch farbliche Kennzeichnung der Nutensteine und korrespondierende Farbkennzeichnung der Einhängevorrichtungen vorab geplante Positionen der zu befestigenden Ausrüstungsteile jeweils ohne neue Vermessung der Positionen mit hoher Genauigkeit immer wieder getroffen werden. Somit können selbst Laien durch simple Arbeitsanweisungen mit Hinweis auf die entsprechende Farbe eine sichere Montage vornehmen. Ein Montageplan mit Abmessungen kann gegebenenfalls eingespart werden, was Zeit bei der Montage spart und Fehler vermeidet.

## Patentansprüche

1. Befestigungsvorrichtung mit verlagerbaren Fixierungspunkten, wobei die Befestigungsvorrichtung mindestens eine Schiene (1, 13) mit einem im wesentlichen C-förmigen Querschnitt, einem Schienenrücken (2), Randleisten (4, 4'), zwischen denen eine vordere Längsnut (5) gebildet ist und mindestens einen in der Schiene (1, 13) angeordneten Nutenstein (6, 52) umfasst, der mittels mindestens einem Spannelement in der Schiene (1, 13) fest verspannt wird,
**dadurch gekennzeichnet, dass** das Spannelement an dem Schienenrücken (2) und der Nutenstein (6, 52) an den Randleisten (4, 4') zur Anlage kommen, und dass über das Spannelement eine Spannkraft erzeugt wird, durch die der Nutenstein (6, 52) gegen die Randleisten (4, 4') gepresst wird, wobei eine Einhängevorrichtung (25, 39, 46, 51) vorgesehen ist, die wenigstens ein Einhängeelement (26, 41, 60) aufweist und dass der Nutenstein (6, 52) die Form einer länglichen Platte aufweist, in der eine längliche Öffnung (9, 55) mit mindestens zwei Abschnitten vorgesehen ist, wobei ein Abschnitt breiter ausgebildet ist als ein anderer Abschnitt und das Einhängeelement (26, 41, 60) durch die Öffnung (9, 55) in einen Spalt (22) zwischen dem Schienenrücken (2) und dem Nutenstein (6, 52) einführbar und durch eine Dreh- oder Schiebebewegung hinter dem Nutenstein (6, 52) gehalten ist.

2. Befestigungsvorrichtung nach Anspruch 1,
**dadurch gekennzeichnet, dass** das Spannelement eine Spannschraube (8, 54) ist, die in einer Gewindebohrung (7, 53) des Nutensteins (6, 52) aufgenommen ist, wobei vorzugsweise die Spannschraube als eine Madenschraube (8, 54) ausgeführt ist.

3. Befestigungsvorrichtung nach Anspruch 1 oder 2,
**dadurch gekennzeichnet, dass** an den Randleisten (4, 4') der Schiene (1, 13) zum Schienenrücken (2) gerichtet eine gleichmäßige Folge von Zähnen (16) vorgesehen ist und der Nutenstein (6, 52) auf der den Randleisten (4, 4') zugewandten Seite mit Zähnen (17) versehen ist, die bezüglich der Form und des Abstands exakt den Zähnen (16) an den Randleisten entsprechen.

4. Befestigungsvorrichtung nach Anspruch 3,
**dadurch gekennzeichnet, dass** die Zähne (17) des Nutensteins (6, 52) nur in einem Bereich nahe des Spannelements (8, 54) vorgesehen sind.

5. Befestigungsvorrichtung nach einem der Ansprüche 1 bis 4,
**dadurch gekennzeichnet, dass** einer der Abschnitte ein Einhängeabschnitt (10) und ein anderer Abschnitt ein Halteabschnitt (11) ist, wobei das Einhängeelement (26, 41) durch den Einhängeabschnitt (10) in den Spalt (22) einführbar und in dem Halteabschnitt (11) verschiebbar ist.

6. Befestigungsvorrichtung nach einem der Ansprüche 1 bis 5,
**dadurch gekennzeichnet, dass** die Einhängevorrichtung (25, 39, 46) eine Platte (24, 40) umfasst, die an der Schiene (1, 13) zur Anlage kommt, und das Einhängeelement (26, 41) einen Schaft (28, 44) mit einem Kopf (29, 43) aufweist.

7. Befestigungsvorrichtung nach einem der Ansprüche 1 bis 4,
**dadurch gekennzeichnet, dass** ein Abschnitt (56) der länglichen Öffnung (55) in der Mitte deren Längsstreckung angeordnet und kreisförmig ausgebildet ist und von diesem Abschnitt (56) ausgehend je ein schlitzartiger Abschnitt (57) vorgesehen ist.

8. Befestigungsvorrichtung nach Anspruch 7,
**dadurch gekennzeichnet, dass** die Einhängevorrichtung (51) eine Platte (58) und ein Einhängeelement (60) umfasst, das einen durch die Platte (58) geführten und in dieser drehbar gelagerten Bolzen (61) aufweist, der an den in den Spalt (22) ragenden Enden mit sich quer zur Bolzenachse erstreckenden Riegelvorsprüngen (62) versehen ist.

9. Befestigungsvorrichtung nach einem der Ansprüche 6 oder 8,
**dadurch gekennzeichnet, dass** in der Platte (24) eine Bohrung (33, 33') angeordnet ist, die im eingehängten Zustand der Einhängevorrichtung (25) vor der Spannschraube (8) liegt, insbesondere konzentrisch zu dieser ist.

10. Befestigungsvorrichtung nach einem der Ansprüche 6 oder 8,
**dadurch gekennzeichnet, dass** die Platte (24) eine Vorrichtung zum formschlüssigen Eingriff in die Längsnut (5) der Schiene (1, 13) aufweist.

11. Befestigungsvorrichtung nach einem der Ansprüche 1 bis 10,
**dadurch gekennzeichnet, dass** der Nutenstein (6, 52) im Bereich der Öffnung (9, 55) dünner und somit der Abstand zum Schienenrücken (2) größer ist.

12. Befestigungsvorrichtung nach Anspruch 5,
**dadurch gekennzeichnet, dass** der Nutenstein (6) an einem Ende mit einer Gewindebohrung (19) versehen ist mit einer darin aufgenommenen Schraube (20) deren Kopf sich in einem Spalt (22) zwischen dem Nutenstein (6) und dem Schienenrücken (2) befindet.

13. Befestigungsvorrichtung nach einem der Ansprüche 1 bis 11,
**dadurch gekennzeichnet, dass** in der Platte (24) und dem Nutenstein (6) Bohrungen (50, 50', 34, 34') vorgesehen sind, die in eingehängtem Zustand der Einhängevorrichtung (25) konzentrisch angeordnet sind und zur Aufnahme eines Verriegelungselements dienen.

14. Befestigungsvorrichtung nach Anspruch 5,
**dadurch gekennzeichnet, dass** die Einhängevorrichtung (46) zwei in einem vorgegebenen Abstand angeordnete Einhängeelemente (41) aufweist.

15. Befestigungsvorrichtung nach einem der Ansprüche 1 bis 14,
**dadurch gekennzeichnet, dass** die Schiene (1, 13) und der Nutenstein (6, 52) aus Stahl bestehen.

## Claims

1. Fastening device with movable fixing points, wherein the fastening device has at least one rail (1, 13) having a substantially C-shaped cross-section, a back (2) of the rail, edge strips (4, 4'), between which a front longitudinal groove (5) is formed, and at least one slotted nut (6, 52) arranged in the rail (1, 13), the slotted nut being securely tensioned in the rail (1, 13) by means of at least one clamping element,
**characterised in that** the clamping element abuts the back (2) of the rail and the slotted nut (6, 52) abuts the edge strips (4, 4'), and a clamping force is produced via the clamping element, through which the slotted nut (6, 52) is pressed against the edge strips (4, 4'), wherein a suspension device (25, 39, 46, 51) is provided, which has at least one suspension element (26, 41, 60), and the slotted nut (6, 52) is in the shape of an elongated plate, in which a longitudinal opening (9, 55) having at least two portions is provided, one portion being wider than another portion, and the suspension element (26, 41, 60) being insertable through the opening (9, 55) into a gap (22) between the back (2) of the rail and the slotted nut (6, 52) and held through a rotational or sliding movement behind the slotted nut (6, 52).

2. Fastening device according to claim 1,
**characterised in that** the clamping element is a clamping screw (8, 54), which is received in a threaded bore (7, 53) of the slotted nut (6, 52), wherein preferably the clamping screw is designed as a set screw (8, 54).

3. Fastening device according to claim 1 or 2,
**characterised in that** a regular sequence of teeth (16) are provided at the edge strips (4, 4') of the rail (1, 13) orientated towards the back (2) of the rail, and the slotted nut (6, 52) is provided on the side facing towards the edge strips (4, 4') with teeth (17), which correspond exactly to the teeth (16) at the edge strips in terms of shape and spacing.

4. Fastening device according to claim 3,
**characterised in that** the teeth (17) of the slotted nut (6, 52) are provided only in an area close to the clamping element (8, 54).

5. Fastening device according to one of claims 1 to 4,
**characterised in that** one of the portions is a suspension portion (10) and another portion is a holding portion (11), wherein the suspension element (26, 41) can be inserted through the suspension portion (10) into the gap (22) and can be displaced in the holding portion (11).

6. Fastening device according to one of claims 1 to 5,
**characterised in that** the suspension device (25, 39, 46) comprises a plate (24, 40) which abuts the rail (1, 13), and the suspension element (26, 41) has a shaft (28, 44) with a head (29, 43).

7. Fastening device according to one of claims 1 to 4,
**characterised in that** a portion (56) of the longitudinal opening (55) is arranged in the middle of its longitudinal extension and is circularly formed and a respective slot-type portion (57) is provided extending from this portion (56).

8. Fastening device according to claim 7,
**characterised in that** the suspension device (51) comprises a plate (58) and a suspension element (60), which has a bolt (61) guided through the plate (58) and mounted so that it can be rotated therein, the bolt being provided, at the ends projecting into the gap (22), with latching protrusions (62) extending transversely to the bolt axis.

9. Fastening device according to one of claims 6 or 8,
**characterised in that** a bore (33, 33') is arranged in the plate (24), the bore lying, when the suspension device (25) is in the suspended state, in front of the clamping screw (8), in particular being concentric with it.

10. Fastening device according to one of claims 6 or 8,
**characterised in that** the plate (24) has a device for positively fixing engagement in the longitudinal groove (5) of the rail (1, 13).

11. Fastening device according to one of claims 1 to 10,
**characterised in that** the slotted nut (6, 52) is thinner in the region of the opening (9, 55) and the distance from the back (2) of the rail is therefore greater.

12. Fastening device according to claim 5,
**characterised in that** the slotted nut (6) is provided at one end with a threaded bore (19), with a screw (20) received therein, of which the head is located in a gap (22) between the slotted nut (6) and the back (2) of the rail.

13. Fastening device according to one of claims 1 to 11,
**characterised in that** bores (50, 50', 34, 34') are provided in the plate (24) and the slotted nut (6), the bores being arranged concentrically when the suspension device (25) is in the suspended state and serving to receive a latching element.

14. Fastening device according to claim 5,
**characterised in that** the suspension device (46) has two suspension elements (41) arranged at a predefined spacing.

15. Fastening device according to one of claims 1 to 14,
**characterised in that** the rail (1, 13) and the slotted nut (6, 52) are made of steel.

## Revendications

1. Dispositif de fixation avec des points de fixation déplaçables, le dispositif de fixation comprenant au moins un rail (1, 13) avec une section globalement en C, avec un dos de rail (2) et des rebords (4, 4') entre lesquels est formée une rainure longitudinale avant (5), et au moins un coulisseau (6, 52) qui est disposé dans le rail (1, 13) et qui est serré dans le rail (1, 13) à l'aide d'au moins un élément de serrage,
**caractérisé en ce que** l'élément de serrage vient s'appliquer contre le dos de rail (2), et le coulisseau (6, 52) contre les rebords (4, 4'), et **en ce qu'**une force de serrage est produite par l'intermédiaire de l'élément de serrage, grâce à laquelle le coulisseau (6, 52) est pressé contre les rebords (4, 4'), un dispositif d'accrochage (25, 39, 46, 51) étant prévu, qui comporte au moins un élément d'accrochage (26, 41, 60), et **en ce que** le coulisseau (6, 52) a la forme d'une plaque oblongue dans laquelle est prévue une ouverture oblongue (9, 55) avec au moins deux sections, une section étant plus large que l'autre, et l'élément d'accrochage (26, 41, 60) étant apte à être introduit par l'ouverture (9, 55) dans un interstice (22) entre le dos de rail (2) et le coulisseau (6, 52) et étant retenu derrière ledit coulisseau (6, 52) grâce à un mouvement rotatif ou coulissant.

2. Dispositif de fixation selon la revendication 1,
**caractérisé en ce que** l'élément de serrage est une vis de serrage (8, 54) qui est logée dans un perçage fileté (7, 53) du coulisseau (6, 52), la vis de serrage étant conçue de préférence comme une vis sans tête (8, 54).

3. Dispositif de fixation selon la revendication 1 ou 2,
**caractérisé en ce qu'**il est prévu sur les rebords (4, 4') du rail (1, 13), dirigée vers le dos de rail (2), une succession régulière de dents (16), et le coulisseau (6, 52) est pourvu, sur son côté tourné vers les rebords (4, 4'), de dents (17) qui correspondent exactement, par leur forme et leur écartement, aux dents (16) prévues sur les rebords.

4. Dispositif de fixation selon la revendication 3,
**caractérisé en ce que** les dents (17) du coulisseau (6, 52) ne sont prévues que dans une zone proche de l'élément de serrage (8, 54).

5. Dispositif de fixation selon l'une des revendications 1 à 4,
**caractérisé en ce que** l'une des sections est une section d'accrochage (10), et une autre une section de retenue (11), l'élément d'accrochage (26, 41) étant apte à être introduit dans l'interstice (22) par la section d'accrochage (10) et étant apte à coulisser dans la section de retenue (11).

6. Dispositif de fixation selon l'une des revendications 1 à 5,
**caractérisé en ce que** le dispositif d'accrochage (25, 39, 46) comprend une plaque (24, 40) qui vient s'appliquer contre le rail (1, 13), et l'élément d'accrochage (26, 41) comporte une tige (28, 44) avec une tête (29, 43).

7. Dispositif de fixation selon l'une des revendications 1 à 4,
**caractérisé en ce qu'**une section (56) de l'ouverture oblongue (55) est disposée au milieu de l'extension longitudinale de celle-ci et est ronde, et il est prévu à partir de cette section (56) des sections en forme de fentes (57).

8. Dispositif de fixation selon la revendication 7,
**caractérisé en ce que** le dispositif d'accrochage (51) comprend une plaque (58) et un élément d'accrochage (60) comportant une cheville (61) qui traverse la plaque (58), qui est montée en rotation dans celle-ci et qui est pourvue, à ses extrémités dépassant dans l'interstice (22), de saillies de verrouillage qui s'étendent transversalement par rapport à l'axe de la cheville.

9. Dispositif de fixation selon l'une des revendications 6 à 8,
**caractérisé en ce qu'**il est prévu dans la plaque (24) un perçage (33, 33') qui, à l'état accroché du dispositif d'accrochage (25), se trouve devant la vis de serrage (8) et est en particulier concentrique par rapport à celle-ci.

10. Dispositif de fixation selon l'une des revendications 6 à 8,
**caractérisé en ce que** la plaque (24) comporte un dispositif pour l'accouplement par complémentarité de forme dans la rainure longitudinale (5) du rail (1, 13).

11. Dispositif de fixation selon l'une des revendications 1 à 10,
**caractérisé en ce que** le coulisseau (6, 52), dans la zone de l'ouverture (9, 55), est plus mince, et l'écartement par rapport au dos de rail (2) est donc plus grand.

12. Dispositif de fixation selon la revendication 5,
**caractérisé en ce que** le coulisseau (6) est pourvu, à une extrémité, d'un perçage fileté (19) avec une vis (20) qui est logée dans celui-ci et dont la tête se trouve dans un interstice (22) entre le coulisseau (6) et le dos de rail (2).

13. Dispositif de fixation selon l'une des revendications 1 à 11,
**caractérisé en ce qu'**il est prévu dans la plaque (24) et le coulisseau (6) des perçages (50, 50', 34, 34') qui, à l'état accroché du dispositif d'accrochage (25), sont disposés de manière concentrique et servent à recevoir un élément de verrouillage.

14. Dispositif de fixation selon la revendication 5,
**caractérisé en ce que** le dispositif d'accrochage (46) comporte deux éléments d'accrochage (41) disposés avec un écartement prédéfini.

15. Dispositif de fixation selon l'une des revendications 1 à 14,
**caractérisé en ce que** le rail (1, 13) et le coulisseau (6, 52) sont en acier.
